Europäisches Patentamt

European Patent Office

Office européen des brevets

(19)

(11) Veröffentlichungsnummer: **0 219 612**
**A2**

(12) **EUROPÄISCHE PATENTANMELDUNG**

(21) Anmeldenummer: 86109359.9

(51) Int. Cl.4: **C10J 3/84**

(22) Anmeldetag: 09.07.86

(30) Priorität: 22.10.85 DE 3537493

(43) Veröffentlichungstag der Anmeldung:
29.04.87 Patentblatt 87/18

(84) Benannte Vertragsstaaten:
**AT BE CH DE FR GB IT LI LU NL SE**

(71) Anmelder: **Uhde GmbH**
**Friedrich-Uhde-Strasse 15 Postfach 262**
**D-4600 Dortmund 1(DE)**

(72) Erfinder: **Brandl, Adrian, Dipl.-Ing.**
**Himpendahlweg 1**
**D-4600 Dortmund 1(DE)**
Erfinder: **Keller, Heinz Jochen, Dipl.-Ing.**
**Vethackeweg 22**
**D-4600 Dortmund 30(DE)**
Erfinder: **Wehner, Herbert, Dipl.-Ing.**
**Im Rosengrund 21**
**D-5840 Schwerte(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) **Verfahren zur Aufbereitung von Quenchwasser.**

(57) Bei einem Verfahren zur Aufbereitung von bei der Druckvergasung von festen oder flüssigen Brennstoffen anfallenden Reinigungs-bzw. Quenchwasser, soll eine Lösung geschaffen werden, mit der insbesondere die Kühlung und Entspannung großer Quenchwassermengen zur Feststoffabscheidung entbehrlich gemacht werden.

Dies wird dadurch erreicht, daß das aus dem Quenchraum abgezogene, mit Feststoffen beladene Quenchwasser einer Druckerhöhung unterworfen und bei gegenüber der Quenchraumtemperatur im wesentlichen gleicher Temperatur einem Druck-Feststoffabscheider zugeführt wird.

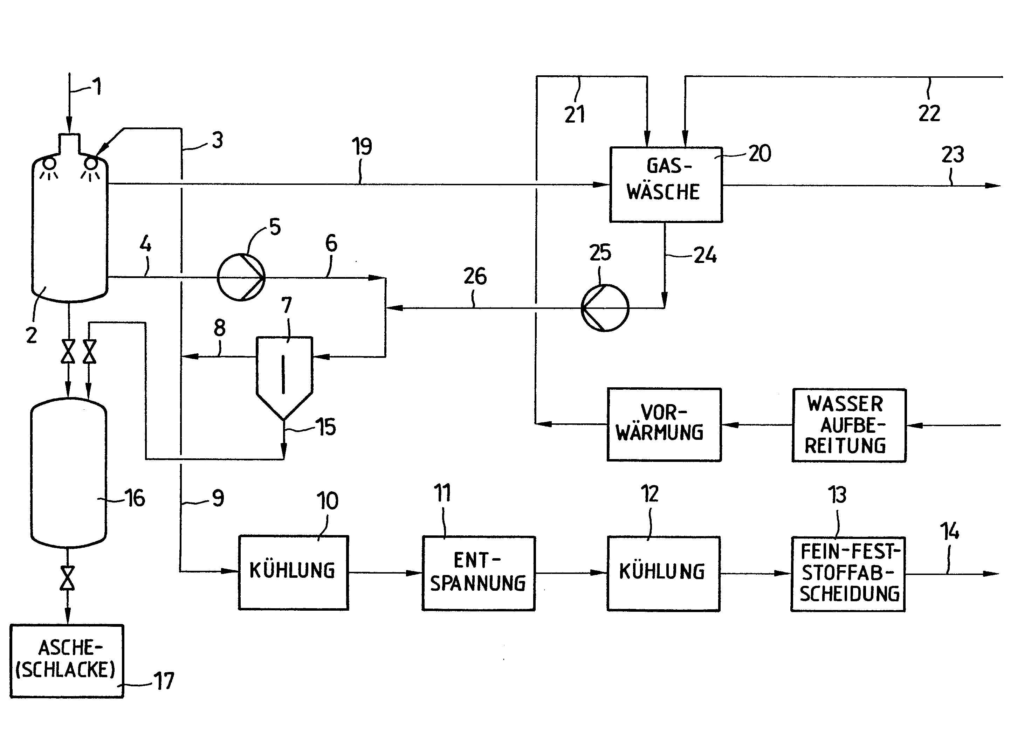

Hierzu ist die einzige Zeichnung zu veröffentlichen.

## "Verfahren zur Aufbereitung von Quenchwasser"

Die Erfindung richtet sich auf ein Verfahren zur Aufbereitung von bei der Druckvergasung von festen oder flüssigen Brennstoffen anfallenden Reinigungs-bzw. Quenchwasser.

Bei der Druckvergasung von Brennstoffen, wie Kohle, Rückstand aus eine Kohlehydrierung, Torf od. dgl., muß das Rohgas einer Reinigung unterzogen werden. Als Quench-oder Reinigungsmittel wird Wasser verwendet. Bekannt ist es dabei, das mit Feststoff beladene Wasser aus dem Quenchraum abzuziehen, es in mehreren Stufen abzukühlen und zu entspannen, zu reinigen und ggf. teilweise dem Quenchraum nach einer Druckerhöhung und Vorwärmung und einer erneuten Druckerhöhung wieder zuzuführen. Wie aus der DE-OS 27 35 090 und dem Artikel von J. Kolaian, W. Schlinger (Energy Progress Vol. 2, No. 4, Dez. 82, Seite 228 bis 233 und dem Konferenzbeitrag von E. Norton, K. Gockenbach "Chemicals from coal", April 14.-18., 1985, San Franzisko, bekannt ist, wird das aus dem Quenchbehälter abgezogene Wasser abgekühlt, entspannt und nach Feststoffabscheidung teilweise rezirkuliert.

Da die Druckvergasung bei Drücken weit über 5 bar durchgeführt wird, gewöhnlich bei 10 bis 80 bar, und je nach Vergasungsverfahren und nachgeschalteter Kühlung ein Rohgas mit Temperaturen zwischen 2000° und 200° C erzeugt wird, bedeuten die Kühlungs-und Entspannungsschritte für das feststoffbeladene Quenchwasser einen sehr großen apparativen und energetischen Aufwand, da sehr große Mengen an feststoffbeladenem Wasser behandelt werden müssen. Da die Feststoffe bis zur Feststoffabscheidung durch alle Anlagenteile mitgeführt werden müssen, bedeutet dies gleichzeitig eine Milderung der Funktionsfähigkeit und einen hohen Verschleiß dieser Anlagenteile.

Aufgabe der Erfindung ist die Schaffung einer Lösung, mit der insbesondere die Kühlung und Entspannung großer Quenchwassermengen zur Feststoffabscheidung entbehrlich gemacht werden.

Bei einem Verfahren der eingangs bezeichneten Art wird diese Aufgabe gemäß der Erfindung dadurch gelöst, daß das aus dem Quenchraum abgezogene, mit Feststoffen beladene Quenchwasser einer Druckerhöhung unterworfen und bei gegenüber der Quenchraumtemperatur im wesentlichen gleicher Temperatur einem Druck-Feststoffabscheider zugeführt wird.

Mit der Erfindung wird erreicht, daß die Feststoffe unmittelbar nach dem Verlassen des Quenchraumes bei hohem Druck abgetrennt werden können. Für die Druckerhöhung sorgt in der Regel die das beladene Quenchwasser absaugende Pumpe. Die Druckerhöhung hat den weiteren Vorteil, daß die Feststoffabscheidung leichter vorgenommen werden kann.

Durch die vergleichsweise hohe Temperatur, wobei im Quenchraum Temperaturen zwischen 120° und 260° C herrschen, wird die Abscheidung im übrigen noch erleichtert, da die Wasserdichte bei steigender Temperatur sinkt, während die Feststoffdichte praktisch gleich bleibt.

Vorteilhaft ist es, wenn, wie dies die Erfindung vorsieht, das den Druck-Feststoffabscheider verlassende Wasser (Klarlauf) zu einem Teil dem Quenchraum wieder zugeführt wird.

Die Erfindung sieht auch vor, daß ein Teil des Wassers nach Kühlung und Entspannung auf Umgebungsbedingungen einem nachgeschalteten Feststoffabscheider zugeführt wird. Erkennbar sind die so behandelten Wassermengen feststoffarm, so daß die davon beaufschlagten Anlagenteile, wie die Entspannungsventile u. dgl., nachhaltig geschont werden. Auch setzen sich beispielsweise die vorgesehenen Wärmetauscher zur Kühlung nicht mehr zu u. dgl. mehr.

Ein weiteres ausgestaltendes Merkmal der Erfindung besteht darin, daß die in dem Druck-Feststoffabscheider anfallenden Feststoffe über eine Schleuse diskontinuierlich oder über eine Entspannungsarmatur kontinuierlich abgezogen werden.

Die Erfindung sieht schließlich auch vor, daß Überlaufwasser aus dem Quenchraum in die nachgeschaltete Gaswächse geführt und von dort wenigstens teilweise über eine Druckerhöhung dem Druck-Feststoffabscheider zugeführt wird.

Die Erfindung ist nachstehend anhand der Zeichnung beispielsweise näher erläutert. Diese zeigt in der einzigen Figur ein Prinzipschaltbild einer Anlage zur Durchführung der erfindungsgemäßen Verfahrensweise.

Über die Leitung 1 wird das heiße Rohgas in den Quenchraum 2 eingebracht. Über die Leitung 3 wird Quenchwasser eingedüst, wie dies in der Figur symbolisch dargestellt ist. Das sich im Sumpf sammelnde Quenchwasser ist mit Feststoffen beladen und wird über eine Leitung 4 einer Druckerhöhungs-und Förderpumpe 5 zugeführt, die das feststoffbeladene Quenchwasser über eine weitere Leitung 6 einem Druck-Feststoffabscheider 7 zuführt.

Im dargestellten Beispiel wird der Klarlauf über eine Leitung 8 vom Druck-Feststoffabscheider 7 weitergeleitet, wobei sich der Klarlauf 8 in die Zuführleitung 3 zum Quenchraum 2 und eine weitere Leitung 9 für einen Teilstrom aufteilt. Der über die Leitung 9 abgeführte Teilstrom wird zunächst, beispielsweise in einem Wärmetauscher 10, gekühlt, danach über eine entsprechende Armatur 11 entspannt und erneut über einen Wärmetauscher 12 gekühlt und schließlich einem Fein-Feststoffabscheider 13 zugeführt. Das dann vom Feststoff befreite Wasser wird übear die Leitung 14 aus dem System abgezogen.

Der Feststoff wird, beispielsweise als Suspension, über eine Leitung 15, einer Austragschleuse 16 zugeführt. Die Asche (Schlacke) kann wiederum über eine Asche-Austragungsvorrichtung 17 dann entsorgt werden.

Im oberen Bereich des Anlagenschaubildes ist eine weitere Leitung 19 gezeigt, die vom Quenchraum 2 zu einem Gaswäscher 20 führt. Über diese Leitung 19 wird das gekühlte Gas aus dem Quenchraum 2 dem Gaswäscher 20 zugeführt. Über eine weitere Leitung 21 wird aufbereitetes Frischwasser zugeführt. Auch kann beispielsweise über die Leitung 22 weiteres Prozeßkondensat in den Prozeß eingeführt werden. Das gewaschene Gas verläßt den Prozeß über die Leitung 23.

Feststoffbeladenes Abwasser wird dem Gaswäscher über die Leitung 24 entnommen und einer Pumpe 25 zugeführt, die dieses auf das Druckniveau des Druck-Feststoffabscheiders 7 bringt und der Leitung 6 über eine Leitung 26 zuführt.

Wie weiter oben bereits angeführt, nimmt die Dichte von Wasser bei steigenden Temperaturen ab. Hier einige Zahlen: Die Feststoffdichte kann je nach Feststoffbeschaffenheit mit etwa 2100 bis 2700· kg/m³ angegeben werden, während die Wasserdichten sich wie folgt darstellen: d (40° C) = 992kg/m³, d (120° C) = 942 kg/m³, d (260° C) = 784 kg/m³. Nachfolgend werden zwei Beispiele der Prozeßführung mit Drücken, Temperaturen und Mengen wiedergegeben, die im Vergleich zu der bisherigen Verfahrensweise gesetzt sind.

Beispiel 1:

In einer Flugstromvergasung unter einem Druck von 65 bar werden dem Quenchraum 2 das heiße Rohgas über die Leitung 1 und 179 t/h Quenchwasser über die Leitung 3 zugeführt. Das Rohgas wird gekühlt und wasserdampfgesättigt.

80 t/h des nicht verdampften und mit ca. 336 kg/h Feststoffen beladenen Wassers werden über die Leitung 4 aus dem Quenchraum 2 mittels der Pumpe 5 abgezogen und einem Hydrozyklon 7 zugeführt. Die Temperatur des Stromes in der Leitung 4 beträgt ungefähr 248° C. Durch die Pumpe 5 wird der Druck um 5 bis 8 bar erhöht, um den durch den Druckabscheider, die Quenchwassereinlaufvorrichtigung, die Armaturen und Rohrleitungen verursachten Druckverlust zu decken.

Vor Eintritt in den Hydrozyklon 7 wird zum Quenchwasserstrom in der Leitung 6 über die Leitung 26 138,2 t/h Was ser mit einer Temperatur von etwa 240° C und einem ähnlichen Druckniveau zugeführt. Dieses Zusatzwasser ist mit ca. 200 kg/h Feststoff aus dem Gaswäscher 20 beladen.

Im Hydrozyklon werden 492,6 kg/h Feststoffe als 30 %-ige Suspension über die Leitung 15 abgeschieden und der Schlackenschleuse, die diskontinuierlich arbeitet, zugeführt.

Der Klarlauf (Leitung 8) wird in 179 t/h Quenchwasser in der Leitung 3 und 38 t/h Abwasser in der Leitung 9 aufgeteilt. Dieser Klarlauf enthält etwa noch 200 ppm Feststoffe.

Vergleicht man das oben beschriebene Beispiel mit einem Beispiel nach der herkömmlichen Verfahrensweise, so wäre die Bearbeitung von 78,8 t/h Abwasser in der Leitung 9 zu behandeln gewesen, d.h. der Kühlung 10 einer Entspannung 11 einer weiteren Kühlung und einer Aufbereitung mit Vorwärmung zuzuführen gewGesen.

Beispiel 2:

In einer Flugstrom-Kohlevergasung mit einem Druck von 32 bar, werden dem Quenchraum 2 das heiße Rohgas und 179 t/h Quenchwasser zugeführt. Das Rohgas wird gekühlt und wasserdampfgesättigt.

125,7 t/h des nicht verdampften und mit ca. 201 kg/h Feststoffen beladenen Wassers wird aus dem Quenchraum 2 mittels der Pumpe 5 abgezogen und einem Koaleszier-Platten-Abscheider 7 zugeführt. Die Temperatur des Stromes beträgt ungefähr 210° C. Durch die Pumpe 5 wird der Druck im Strom 6 um 5 bis 8 bar erhöht.

Vor Eintritt in den Koaleszier-Platten-Abscheider 7 wird dem Strom in Leitung 6 über die Leitung 26 77 t/h Wasser mit 110 kg/h Feststoff zugemischt, wobei die dortige Temperatur ungefähr 201° C bei ähnlichem Druckniveau beträgt.

Im Koaleszier-Platten-Abscheider werden 270,6 kg/h Feststoffe als 30 %-ige Suspension abgeschieden und der Schlackenschleuse 17 zugeführt.

Der Klarlauf wird in 23 t/h Abwasser und 179 kg/h Quenchwasser aufgeteilt. Der Klarlauf enthält ungefähr 200 ppm Feststoffe.

Bei einem Verfahren nach dem Stand der Technik hätten 124,8 t/h Abwasser statt der oben angegebenen 23 t/h ausgeschleust, gekühlt, entspannt, aufbereitet und davon 98,9 t/h als Grauwasser rezirkuliert werden müssen.

**Ansprüche**

1. Verfahren zur Aufbereitung von bei der Druckvergasung von festen oder flüssigen BreEnnstoffen anfallenden Reinigungs-bzw. Quenchwasser,

dadurch gekennzeichnet,

daß das aus dem Quenchraum abgezogene, mit Feststoffen beladene Quenchwasser einer Druckerhöhung unterworfen und bei gegenüber der Quenchraumtemperatur im wesentlichen gleicher Temperatur einem Druck-Feststoffabscheider zugeführt wird.

2. Verfahren nach Anspruch 1 mit einer weiteren Reinigung des die Quenchstufe verlassenden Rohgases,

dadurch gekennzeichnet,

daß dem abgezogenen Quenchwasser feststoffbeladenes Wasser aus nachgeschalteten Gasreinigungsstufen zugemischt wird.

3. Verfahren nach Anspruch 1 oder 2,

dadurch gekennzeichnet,

daß das den Druck-Feststoffabscheider verlassende Wasser (Klarlauf) zu einem Teil dem Quenchraum wieder zugeführt wird.

4. Verfahren nach Anspruch 3,

dadurch gekennzeichnet,

daß ein Teil des Wassers nach Kühlung und Entspannung auf Umgebungsbedingungen einem nachgeschalteten Feststoffabscheider zugeführt wird.

5. Verfahren nach einem der vorangehenden Ansprüche,

dadurch gekennzeichnet,

daß die in dem Druck-Feststoffabscheider anfallenden Feststoffe über eine Schleuse diskontinuierlich oder über eine Entspannungsarmatur kontinuierlich abgezogen werden.

6. Verfahren nach einem der vorangehenden Ansprüche,

dadurch gekennzeichnet,

daß Wasser aus dem Quenchraum als Überlaufwasser in eine nachgeschaltete Gaswäsche geführt und von dort wenigstens teilweise über eine Druckerhöhung dem Druck-Feststoffabscheider zugeführt wird.

7. Anlage zur Durchführung des Verfahrens nach einem der vorangehenden Ansprüche mit einem Quenchraum,

dadurch gekennzeichnet,

daß dem Quenchraum (2) eine Absaugleitung (4) für das mit Feststoff beladene Quenchwasser mit einer Druckerhöhungspumpe (5) zugeordnet ist, wobei die Druckerhöhungspumpe (5) über eine Leitung (6) einen Druck-Feststoffabscheider (7) beaufschlagt.

8. Anlage nach Anspruch 8,

dadurch gekennzeichnet,

daß der Druck-Feststoffabscheider (7) mit einer Rückführleitung (3) für eine Teilstrom-Rückführung des Klarlaufes ausgerüstet ist.

9. Anlage nach einem der vorangehenden Ansprüche,

dadurch gekennzeichnet,

daß der Druck-Feststoffabscheider (7) als Hydrozyklon, als Schwerkraftabscheider mit Einbauten oder als Koaleszier-Platten-Abscheider ausgebildet ist.

10. Anlage nach einem der vorangehendeEn Ansprüche,

dadurch gekennzeichnet,

daß dem Druck-Feststoffabscheider (7) eine Schleuse (17) zur diskontinuierlichen Austragung von Feststoffen zugeordnet ist.

11. Anlage nach einem der vorangehenden Ansprüche,

dadurch gekennzeichnet,

daß der Quenchraum (2) mit einer Überlaufleitung - (19) für Quenchwasser ausgerüstet ist, die einen Gaswäscher (20) beaufschlagt, wobei der Gaswäscher (20) über eine Rückführleitung (24) und eine Druckerhöhungspumpe (25) mit der Zuführleitung - (6) zum Druck-Feststoffabscheider (7) verbunden ist.